# EUROPÄISCHE PATENTSCHRIFT

(11) **EP 1 979 191 B1**
(45) Veröffentlichungstag und Bekanntmachung des Hinweises auf die Patenterteilung: **07.09.2011**
(21) Anmeldenummer: 06829652.4
(22) Anmeldetag: 15.12.2006
(51) Int. Cl.: B60N 3/02, F16B 13/08

(54) **BEFESTIGUNGSEINRICHTUNG, INSBESONDERE FÜR HANDGRIFFE FÜR DEN INNENRAUM EINES KRAFTFAHRZEUGS**
FASTENING DEVICE, IN PARTICULAR FOR HAND GRIPS FOR THE INTERIOR OF THE MOTOR VEHICLE
DISPOSITIF DE FIXATION, NOTAMMENT POUR DES POIGNÉES DANS L'HABITACLE D'UN VÉHICULE AUTOMOBILE

(30) Priorität: 16.01.2006 DE 102006002214
(43) Veröffentlichungstag der Anmeldung: 15.10.2008
(73) Patentinhaber: Johnson Controls Interiors GmbH & Co. KG, 47929 Grefrath (DE)
(72) Erfinder: WELTER, Patrick, F-57730 Lachambre (FR); SELVINI, Frédéric, F-57550 Falck (FR)
(74) Vertreter: Hemmelmann, Klaus
(86) Internationale Anmeldenummer: PCT/EP2006/012104
(87) Internationale Veröffentlichungsnummer: WO 2007/087869

(56) Entgegenhaltungen:
- WO-A-02/062617
- WO-A-2004/005070
- DE-A1- 4 224 148
- JP-A- 2006 057 647

## Beschreibung

Die Erfindung betrifft eine Befestigungseinrichtung, insbesondere für Handgriffe für den Innenraum eines Kraftfahrzeugs, mit einem in eine Ausnehmung einer plattenförmigen Struktur einsetzbaren Lagerböckchen, mit einem in das Lagerböckchen einsetzbaren Stopfen sowie mit Mitteln, durch welche beim Einsetzen des Stopfens ein Hintergreifen der Befestigungseinrichtung hinter der plattenförmigen Struktur herbeiführbar ist.

### Stand der Technik

Eine gattungsgemäße Befestigungseinrichtung zum Festlegen von Innenausstattungteilen an der Karosserie eines Kraftfahrzeugs ist aus der Druckschrift WO 02/062617 A1 bekannt. Sie besteht aus einem Lagerböckchen, welches in einer Ausnehmung der Karosserie verriegelbar und zur drehbaren Anbringung von Handgriffen und dergleichen geeignet ist. An das aus Kunststoff bestehende Lagerböckchen sind einstückig Rastvorsprünge angeformt, welche beim Einschieben in die Ausnehmung zurückfedern und nachfolgend durch einen in das Lagerböckchen eingeschobenen Stopfen gesichert werden.

Eine derartige Ausbildung kann den Nachteil aufweisen, dass die Ausreißfestigkeit der Rastverbindung unzureichend ist und dass die Rastvorsprünge bereits beim Einschieben in die zumeist scharfkantige Ausnehmung der Karosserie Schaden nehmen können. Auch kann eine spätere Demontage mit einem relativ hohen Aufwand an Zeit und Hilfsmitteln verbunden sein.

Das Dokument WO 2004/005070 A1 offenbart eine Befestigungsvorrichtung zum Anschluss von Bauteilen, insbesondere Dachhaltegriffe oder dergleichen, im Fahrzeuginnenraum, insbesondere am Formhimmel des Fahrzeugs, umfassend eine Lagereinrichtung mit einer durchgehenden Ausnehmung, zumindest einem in die Ausnehmung zu Befestigungszwecken einlegbaren Befestigungsmittel, wobei die Lagereinrichtung eine Anschlageinheit aufweist, die im vor- bzw. endmontierten Zustand, d. h. nachdem die Lagereinrichtung bereichsweise in eine im Fahrzeuginnenraum vorhandenen ersten Ausnehmung durchgeführt ist, an der Innenoberfläche der Fahrzeuginnenwand anliegt. Dazu weist die Befestigungsvorrichtung zwei aufspreizende Befestiungshebel auf, die nach der Montage der Befestigungsvorrichtung festlegbar sind.

Die genannte Befestigungsvorrichtung weist den Nachteil auf, dass die Befestigungshebel bei der Montage im Fahrzeuginnem, insbesondere bei Überkopfmontagen von Haltegriffen am Fahrzeughimmel, nicht in der Montagestellung gehalten werden und somit den Einbau in die Ausnehmung im Fahrzeughimmel behindern.

### Aufgabe

Der Erfindung liegt die Aufgabe zugrunde, Befestigungsmittel zur Schaffung einer hochfesten, aber mit einfachen Mitteln lösbaren Verbindung bereitzustellen.

### Lösung

Die Aufgabe wird bei Befestigungseinrichtungen der eingangs genannten Art erfindungsgemäß durch die Merkmale des Anspruchs 1 gelöst.

Vorzugsweise sind das Lagerböckchen und/oder der Stopfen aus Kunststoff spritzgegossen, während der oder die Flügel durch Stanzen und Pressen aus Metall, insbesondere aus Stahlblech, gefertigt werden. Hierdurch kann Lagerböckchen und Stopfen mit relativ geringem Aufwand ein komplexe Gestalt und dem oder den Flügeln eine hohe Festigkeit verliehen werden.

Die übrigen Unteransprüche betreffen weitere vorteilhafte Ausbildungen der Erfindung.

### Figuren

Die Figuren stellen beispielhaft und schematisch eine Ausführung der Erfindung dar.

Es zeigen:

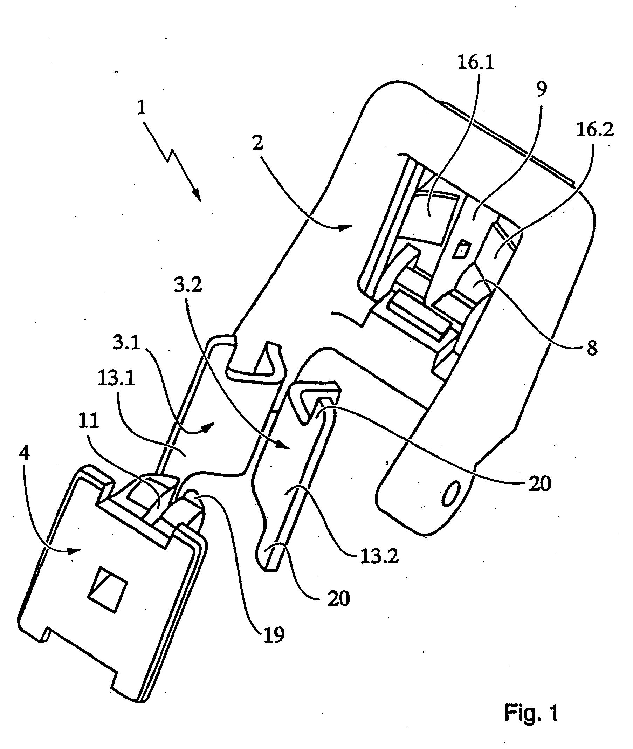

- Fig. 1: die Komponenten einer erfindungsgemäß gestalteten Befestigungseinrichtung in perspektivischer Darstellung (Explosionszeichnung),
- Fig. 2: einen Schnitt durch die Befestigungseinrichtung nach Fig. 1 in Montageposition,
- Fig. 3: den Schnitt nach Fig. 2 in Verriegelungsstellung.

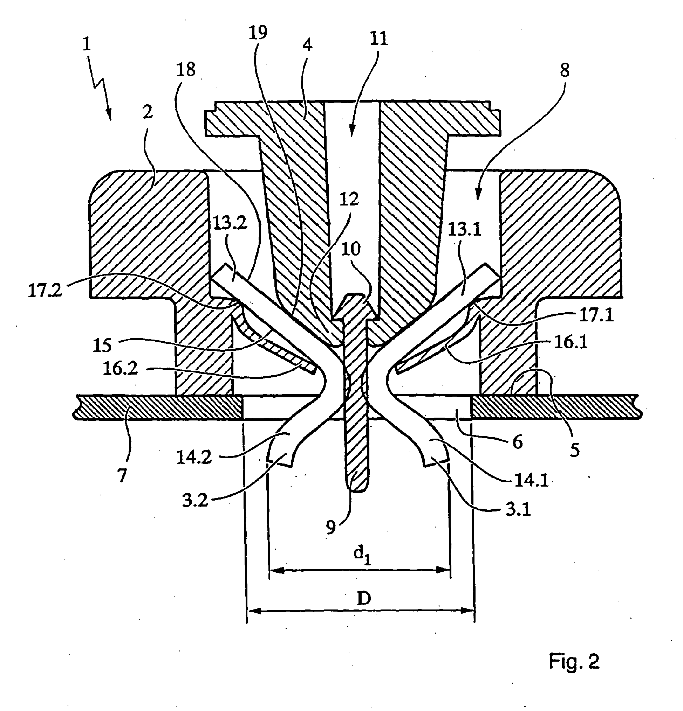

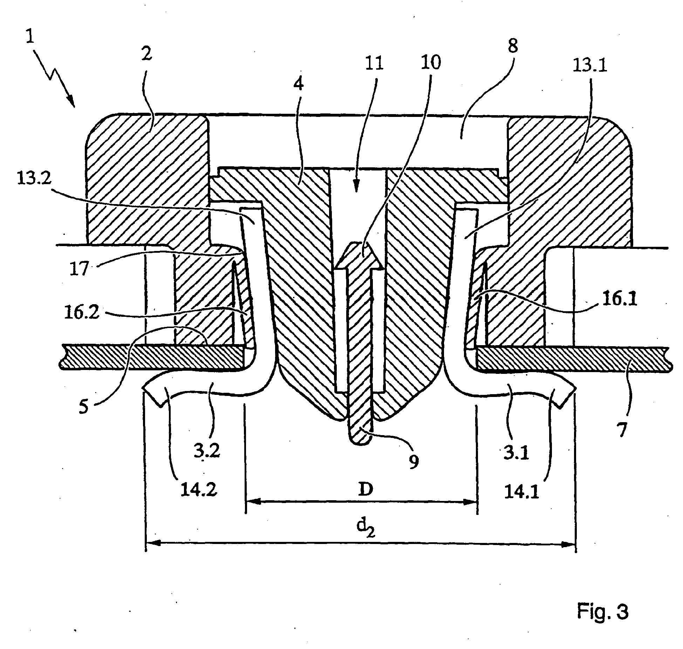

Die in den Figuren dargestellte Befestigungseinrichtung 1 besteht aus einem komplex gestalteten Lagerböckchen 2 aus Kunststoff, zwei L-förmig ausgebildeten Flügeln 3 aus Stahlblech und einem gleichfalls aus Kunststoff gefertigten Stopfen 4. Wie aus Fig. 2 und 3 ersichtlich, ist das spiegelbildlich gestaltete Lagerböckchen 2 unten mit einer planen Anlagefläche 5 versehen, mittels derer es auf eine mit einer Ausnehmung 6 versehene, plattenförmige Struktur aufgesetzt wird, beispielsweise auf das Blech 7 einer Fahrzeugkarosserie.

Das Lagerböckchen 2 ist mit einem zentralen Durchbruch 8 versehen, in welchen der Stopfen 4 senkrecht zur Oberfläche des Blechs 7 in Richtung der Ausnehmung 6 einschiebbar ist. In der Mitte des Lagerböckchens 2 verläuft ein schmaler Steg 9, welcher den Durchbruch 8 teilt und mit seinem auskragenden unteren Ende durch die Ausnehmung 6 hindurch ragt. An seinem oberen Ende ist der Steg 9 mit Rasthaken 10 ausgestattet und wird von einem Schlitz 11 im Stopfen 4 aufgenommen. In der Montageposition nach Fig. 2 ist der Stopfen 4 teilweise in den Durchbruch 8 eingeführt und gegen Verlieren durch klammerartige Ansätze 12 gesichert, welche die Rasthaken 10 des Stegs 9 umgreifen.

Im Durchbruch 8 sind ferner die L-förmigen Flügel 3.1, 3.2 spiegelbildlich zueinander in Montageposition derart angeordnet, dass die Übergänge zwischen den ersten, längeren Schenkeln 13.1, 13.2 und den zweiten , kürzeren Schenkeln 14.1, 14.2 an den einander gegenüberliegenden Vertikalflächen des Stegs 9 anliegen. Die oberen ersten Schenkel 13.1, 13.2 sind dabei jeweils unter einem Winkel von 45° zum Steg 9 geneigt und vollständig innerhalb des Durchbruchs 8 angeordnet. Die unteren zweiten Schenkel 14.1, 14.2, welche rechtwinklig zu den ersten Schenkeln 13.1. 13.2 ausgerichtet sind, ragen hingegen durch die Ausnehmung 6 des Blechs 7 hindurch und weisen voneinander weg. Die Begriffe "oben" und "unten" beziehen sich dabei auf die in den Figuren 2 und 3 gewählte Ausrichtung der Befestigungseinrichtung 1, bei welcher die Anlagefläche 5 nach unten weist.

Der grösste Abstand d₁ zwischen den zweiten Schenkeln 14.1, 14.2 ist so bemessen, dass er kleiner ist als die lichte Weite D der Ausnehmung 6. Die Befestigungseinrichtung 1 kann daher in Montageposition im Bereich der Ausnehmung 6 auf das Blech 7 aufgesetzt werden, bis die Anlagefläche 5 auf dem Blech 7 aufliegt.

Die ersten Schenkel 13.1, 13.2 werden auf ihrer unteren, äußeren Flächenseite 15 durch an das Lagerböckchen 2 angeformte Federzungen 16.1, 16.2 sowie Absätze 17.1, 17.2 und auf ihrer oberen, inneren Flächenseite 18 durch Anlage an den Stopfen 4 mittels Klemmung in Position gehalten. Die Federzungen 16.1, 16.2 erstrecken sich von den Absätzen 17.1, 17.2 am Außenumfang des Durchbruchs 8, näherungsweise parallel zu den Flächenseiten 15, bogenförmig nach unten in Richtung des Stegs 9 und berühren die ersten Schenkel 13.1, 13.2 in der Nähe des Übergangs zu den zweiten Schenkeln 14.1, 14.2 mit ihren freien Enden. Der Stopfen 4 ist im Kontaktbereich zu den ersten Schenkeln 13.1, 13.2 so gestaltet, dass die Flächenseite 18 der Flügel 3.1, 3.2 in einem größeren Flächenbereich 19 am Stopfen 4 anliegt. Der Stopfen 4 läuft somit an seinem unteren Ende keilartig zu.

Beim Einschieben des Stopfens 4 (Verriegelungsposition nach Fig. 3) werden die Flügel 3.1, 3.2 nach außen gespreizt und hintergreifen mit den unteren, nun etwa waagerecht verlaufenden Schenkeln 14.1, 14.2 das Blech 7, wobei ihr größter Abstand d₂ nun etwa das doppelte der lichten Weite D der Ausnehmung 6 beträgt. Die Schwenkbewegung der Flügel 3.1, 3.2 erfolgt dabei um eine virtuelle Achse im Bereich der Absätze 17.1, 17.2 herum. Bei der Spreizung werden die Federzungen 16.1, 16.2 gestreckt und gespannt. Bei einem späteren Zurückziehen des Stopfens 4 drehen die Federzungen 16.1, 16.2 die Flügel 3.1, 3.2 wieder in ihre Montagestellung nach Fig. 2 zurück, so dass die Befestigungseinrichtung 1 mühelos vom Blech 7 gelöst werden kann. Seitliche Vorsprünge 20 an den oberen Schenkeln 13.1, 13.2 verhindern, dass die Flügel 3.1, 3.2 nach unten aus dem Lagerböckchen 2 herausgezogen werden können.

Es versteht sich, dass der Stopfen 4 in seiner Verriegelungsposition durch eine nicht dargestellte Rasteinrichtung oder dergleichen vor ungewolltem Lösen gesichert ist.

### Bezugszeichen

- 1: Befestigungseinrichtung
- 2: Lagerböckchen
- 3.1 , 3.2: Flügel
- 4: Stopfen
- 5: Anlagefläche
- 6: Ausnehmung
- 7: Blech
- 8: Durchbruch
- 9: Steg
- 10: Rasthaken
- 11: Schlitz
- 12: Ansatz
- 13.1, 13.2: Schenkel (oben)
- 14.1, 14.2: Schenkel (unten)
- 15: Flächenseite (des Schenkels 13)
- 16.1, 16.2: Federzunge
- 17: Absatz
- 18: Flächenseite (des Schenkels 13)
- 19: Flächenbereich
- 20: Vorsprung

## Patentansprüche

1. Befestigungseinrichtung (1), insbesondere für Handgriffe für den Innenraum eines Kraftfahrzeugs, mit einem in eine Ausnehmung (6) einer plattenförmigen Struktur einsetzbaren Lagerböckchen (2), mit einem in das Lagerböckchen einsetzbaren Stopfen (4) sowie mit Mitteln, durch welche beim Einsetzen des Stopfens ein Hintergreifen der Befestigungseinrichtung hinter der plattenförmigen Struktur herbeiführbar ist, wobei die Mittel zum Hintergreifen gesondert ausgebildet sind und mindestens einen Flügel (3.1, 3.2) umfassen, welcher durch das Einführen des Stopfens (4) aus einer Montageposition in eine Verriegelungsposition verlagerbar ist, **dadurch gekennzeichnet, dass** die Flügel (3.1, 3.2 durch beim Einführen des Stopfens (4) gespannte Federmittel (16.1, 16.2) in ihrer Montagestellung gehalten werden.

2. Befestigungsvorrichtung nach Anspruch 1, **dadurch gekennzeichnet, dass** das Lagerböckchen (2) und/oder der Stopfen (4) aus Kunststoff bestehen.

3. Befestigungseinrichtung nach einem der Ansprüche 1 bis 2, **dadurch gekennzeichnet, dass** der mindestens eine Flügel (3.1, 3.2) aus Metall, insbesondere aus Stahlblech, besteht.

4. Befestigungseinrichtung nach einem der vorhergehenden Ansprüche, **dadurch gekennzeichnet, dass** der Flügel (3.1, 3.2) L-förmig ausgebildet ist, wobei ein erster Schenkel (13.1, 13.2) des Flügels in den zum Einführen des Stopfens (4) vorgesehenen Durchbruch (8) des Lagerböckchen (2) hineinragt und ein zweiter Schenkel (14.1, 14.2) auf der der plattenförmigen Struktur zugewandten Seite des Lagerböckchens aus dem Durchbruch herausragt.

5. Befestigungseinrichtung nach Anspruch 4, **dadurch gekennzeichnet, dass** in dem Durchbruch (8) zwei Flügel (3.1, 3.2) in spiegelbildlicher Anordnung vorgesehen sind, wobei die freien Enden der zweiten Schenkel (14.1, 14.2) voneinander wegweisen.

6. Befestigungseinrichtung nach Anspruch 4 oder 5, **dadurch gekennzeichnet, dass** die Flügel (3.1, 3.2) um eine tatsächliche oder virtuelle Achse herum schwenkbar in dem Durchbruch (8) angeordnet sind.

7. Befestigungseinrichtung nach einem der vorhergehenden Ansprüche, **dadurch gekennzeichnet, dass** die Federmittel an das Lagerböckchen (2) einstückig angeformte Federzungen (16.1, 16.2) umfassen, welche in dem zum Einführen des Stopfens (4) vorgesehenen Durchbruch (4) angeordnet sind.

8. Befestigungseinrichtung nach einem der Ansprüche 5 bis 7, **dadurch gekennzeichnet, dass** die Flügel (3.1, 3.2) sich im Übergangsbereich zwischen erstem Schenkel (13.1, 13.2) und zweitem Schenkel (14.1, 14.2) in ihrer Montageposition an einem sich mittig im Durchbruch (8) erstreckenden Steg (9) abstützen.

9. Befestigungseinrichtung nach einem der vorhergehenden Ansprüche, **dadurch gekennzeichnet, dass** der Stopfen (4) in das Lagerböckchen (2) einschiebbar ist.

10. Befestigungseinrichtung nach einem der vorhergehenden Ansprüche, **dadurch gekennzeichnet, dass** der Stopfen (4) am Lagerböckchen (2) in einer Flügel (3.1, 3.2) in Montageposition haltenden Stellung festlegbar ist.

## Claims

1. Fastening device (1), in particular for hand grips for the interior of a motor vehicle, with a bearing bracket (2) which can be inserted into a recess (6) in a plate-like structure, with a stopper (4) which can be inserted into the bearing bracket, and with means which, upon insertion of the stopper, make it possible for the fastening device to engage behind the plate-like structure, wherein the engaging-behind means are formed separately and comprise at least one wing (3.1, 3.2) which, by means of the introduction of the stopper (4), can be shifted from an installation position into a locking position, **characterized in that** the wings (3.1, 3.2) are held in their installation position by spring means (16.1, 16.2) which are tensioned upon introduction of the stopper (4).

2. Fastening device according to Claim 1, **characterized in that** the bearing bracket (2) and/or the stopper (4) are/is composed of plastic.

3. Fastening device according to either of Claims 1 and 2, **characterized in that** the at least one wing (3.1, 3.2) is composed of metal, in particular of steel sheet.

4. Fastening device according to one of the preceding claims, **characterized in that** the wing (3.1, 3.2) is of L-shaped design, with a first limb (13.1, 13.2) of the wing projecting into the aperture (8) of the bearing bracket (2), which aperture is provided for the introduction of the stopper (4), and a second limb (14.1, 14.2) projecting out of the aperture on that side of the bearing bracket which faces the plate-like structure.

5. Fastening device according to Claim 4, **characterized in that** two wings (3.1, 3.2) are provided in a mirror-inverted arrangement in the aperture (8), with the free ends of the two limbs (14.1, 14.2) pointing away from each other.

6. Fastening device according to Claim 4 or 5, **characterized in that** the wings (3.1, 3.2) are arranged in the aperture (8) in a manner such that they can pivot about an actual or virtual axis.

7. Fastening device according to one of the preceding claims, **characterized in that** the spring means comprise spring tongues (16.1, 16.2) which are integrally formed on the bearing bracket (2) and are arranged in the aperture (8) provided for the introduction of the stopper (4).

8. Fastening device according to one of Claims 5 to 7, **characterized in that**, in the transition region between the first limb (13.1, 13.2) and the second limb (14.1, 14.2), the wings (3.1, 3.2) are supported in their installation position on a web (9) extending centrally in the aperture (8).

9. Fastening device according to one of the preceding claims, **characterized in that** the stopper (4) can be pushed into the bearing bracket (2).

10. Fastening device according to one of the preceding claims, **characterized in that** the stopper (4) can be fixed on the bearing bracket (2) in a position which holds wings (3.1, 3.2) in the installation position.

## Revendications

1. Dispositif de fixation (1), notamment pour des poignées dans l'habitacle d'un véhicule automobile, avec un élément de support (2) insérable dans un évidement (6) d'une structure en forme de plaque, avec un bouchon (4) insérable dans l'élément de support ainsi qu'avec des moyens par lesquels, lors de l'insertion du bouchon un accrochage du dispositif de fixation derrière la structure en forme de plaque peut être réalisé, dans lequel les moyens d'accrochage arrière sont réalisés séparément et comprennent au moins une aile (3.1, 3.2), qui est déplaçable d'une position de montage à une position de verrouillage par l'insertion du bouchon (4), **caractérisé en ce que** les ailes (3.1, 3.2) sont maintenues dans leur position de montage par des moyens de ressort (16.1, 16.2) contraints lors de l'insertion du bouchon (4).

2. Dispositif de fixation selon la revendication 1, **caractérisé en ce que** l'élément de support (2) et/ou le bouchon (4) sont constitués de matière plastique.

3. Dispositif de fixation selon l'une quelconque des revendications 1 à 2, **caractérisé en ce que** ladite au moins une aile (3.1, 3.2) se compose de métal, en particulier de tôle d'acier.

4. Dispositif de fixation selon l'une quelconque des revendications précédentes, **caractérisé en ce que** l'aile (3.1, 3.2) est réalisée en forme de L, dans lequel une première branche (13.1, 13.2) de l'aile s'engage dans l'ouverture (8) de l'élément de support (2) prévue pour l'insertion du bouchon (4) et une deuxième branche (14.1, 14.2) sort de l'ouverture sur le côté de l'élément de support tourné vers la structure en forme de plaque.

5. Dispositif de fixation selon la revendication 4, **caractérisé en ce qu'**il est prévu dans l'ouverture (8) deux ailes (3.1, 3.2) en position symétrique, dans lequel les extrémités libres des deuxièmes branches (14.1, 14.2) s'écartent l'une de l'autre.

6. Dispositif de fixation selon la revendication 4 ou 5, **caractérisé en ce que** les ailes (3.1, 3.2) sont disposées dans l'ouverture (8) d'une façon pivotante autour d'un axe réel ou virtuel.

7. Dispositif de fixation selon l'une quelconque des revendications précédentes, **caractérisé en ce que** les moyens de ressort comprennent des lamelles élastiques (16.1, 16.2) formées d'une seule pièce sur l'élément de support (2), qui sont disposées dans l'ouverture (8) prévue pour l'insertion du bouchon (4).

8. Dispositif de fixation selon l'une quelconque des revendications 5 à 7, **caractérisé en ce que** les ailes (3.1, 3.2) prennent appui dans leur position de montage, dans la zone de transition entre une première branche (13.1, 13.2) et une deuxième branche (14.1, 14.2), sur une nervure (9) s'étendant au milieu de l'ouverture (8).

9. Dispositif de fixation selon l'une quelconque des revendications précédentes, **caractérisé en ce que** le bouchon (4) peut être glissé dans l'élément de support (2).

10. Dispositif de fixation selon l'une quelconque des revendications précédentes, **caractérisé en ce que** le bouchon (4) peut être fixé dans une position maintenant les ailes (3.1, 3.2) dans la position de montage sur l'élément de support (2).
